(19) **Europäisches Patentamt**
**European Patent Office**
**Office européen des brevets**

(11) **EP 4 242 590 A1**

(12) **EUROPEAN PATENT APPLICATION**
published in accordance with Art. 153(4) EPC

(43) Date of publication:
**13.09.2023 Bulletin 2023/37**

(21) Application number: **20963014.4**

(22) Date of filing: **30.11.2020**

(51) International Patent Classification (IPC):
**G01C 21/32** (2006.01)  **G06F 16/29** (2019.01)

(52) Cooperative Patent Classification (CPC):
**G01C 21/32; G06F 16/29**

(86) International application number:
**PCT/CN2020/132714**

(87) International publication number:
**WO 2022/110126 (02.06.2022 Gazette 2022/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **SHE, Xiaoli**
  **Shenzhen, Guangdong 518129 (CN)**
• **ZHANG, Jiakun**
  **Shenzhen, Guangdong 518129 (CN)**
• **CHEN, Ziwei**
  **Shenzhen, Guangdong 518129 (CN)**

(74) Representative: **Isarpatent**
**Patent- und Rechtsanwälte Barth**
**Charles Hassa Peckmann & Partner mbB**
**Friedrichstrasse 31**
**80801 München (DE)**

(54) **MAP VERIFICATION METHOD AND RELATED APPARATUS**

(57)    Embodiments of this application disclose a map verification method. The method in the embodiments of this application includes: When verification is performed on a high definition map, a vehicle terminal is used to collect and analyze road information; a network device receives target road information sent by the vehicle terminal; the network device updates a target layer based on the target road information; and the network device verifies the high definition map by using the target layer. The verification uses reliable real data as a data source, which improves reliability of verification and reduces technical labor costs.

FIG. 2

**Description**

**TECHNICAL FIELD**

Embodiments of this application relate to the internet field, and in particular, to a map verification method and related apparatuses.

**BACKGROUND**

Currently, autonomous driving relies heavily on high definition maps that provide various information to implement tasks such as vehicle positioning, traffic light detection, path calculation, and planning control. The information provided by the high definition maps may include lane width, lane length, lane turning information, road topology information, intersection shape information, traffic light location information, correspondences between various elements, and the like.

To ensure accuracy of the high definition maps, verification needs to be performed on the high definition maps. The verification may be offline verification or on-site verification implemented by a professional survey and mapping engineer. The offline verification lacks data sources, and a definite mapping relationship between map data and reality cannot be ensured. For the on-site verification performed by the survey and mapping engineer, a large amount of technical manpower is consumed.

**SUMMARY**

A first aspect of embodiments of this application provides a model optimization method, including:
When target road information (road information collected by a vehicle terminal) conflicts with map road information (road information indicated by a map), for example, when the target road information is that a first lane on the left side is a left-turn lane but the map road information shows that the first lane is a straight lane, or when the target road information is that a traffic light in a straight direction is red (the vehicle terminal determines that the traffic light in the straight direction is red based on a collected traffic flow feature and a traffic rule) but the map road information is that the traffic light in the straight direction is green (go-straight light information collected by the vehicle terminal based on a traffic light location indicated by the map road information shows that the light is green), a network device receives the target road information sent by the vehicle terminal, and updates a target layer based on the target road information. The target layer is used to indicate road information used when the target road information is inconsistent with the map road information, and the road information is road surface information and indication information related to vehicle traveling, including one or more of traffic light information, a traffic flow feature (vehicle speed information and vehicle track information), road turning information, lane marker information, and road indication information.

In the embodiments of this application, when verification is performed on a high definition map, the vehicle terminal is used to collect and analyze road information, and the network device verifies the high definition map by using the target layer. In verification, a data source is reliable real data, which improves reliability of verification and reduces technical labor costs.

Based on the first aspect of the embodiments of this application, in a first implementation of the first aspect of the embodiments of this application, the network device may send the target layer to the vehicle terminal, to prompt the vehicle terminal to notice a road information update of a road section ahead, and the like.

In the embodiments of this application, the target layer includes only the road information used when the target road information is inconsistent with the map road information. Compared with the high definition map, the target layer has a smaller amount of information and a higher transmission speed, and network resources for updating the high definition map by the vehicle terminal are reduced.

Based on the first aspect of the embodiments of this application or the first implementation of the first aspect, in a second implementation of the first aspect of the embodiments of this application, the road information may include traffic light information, vehicle terminal track information, and/or road turning information.

The embodiments of this application provide a plurality of road information types, which increases flexibility and feasibility of the solution.

A second aspect of embodiments of this application provides a model optimization method, including:
When target road information collected by a vehicle terminal conflicts with map road information (road information indicated by a map), for example, when the target road information is that a first lane on the left side is a left-turn lane but the map road information shows that the first lane is a straight lane, or when the target road information is that a traffic light in a straight direction is red (the vehicle terminal determines that the traffic light in the straight direction is red based on a collected traffic flow feature and a traffic rule) but the map road information is that the traffic light in the straight direction is green (go-straight light information collected by the vehicle terminal based on a traffic light location indicated by the map road information shows that the light is green), the vehicle terminal sends the target road information to a network device, so that the network device updates a target layer based on the target road information. The target layer is used to indicate road information used when the target road information is inconsistent with the map road information, and the road information is road surface information and indication information related to vehicle traveling, including one or more of traffic light information, a traffic flow feature (vehicle speed information and vehicle track information), road turning information, curb information, and road indication information.

In the embodiments of this application, when verification is performed on a high definition map, the vehicle terminal is used to collect and analyze road information, and the network device verifies the high definition map by using the target layer. In verification, a data source is reliable real data, which improves reliability of verification and reduces technical labor costs.

Based on the second aspect of the embodiments of this application, in a first implementation of the second aspect of the embodiments of this application, the vehicle terminal may receive the target layer sent by the network device, where the target layer may be used to prompt the vehicle terminal to notice a road information update of a road section ahead, and the like. The vehicle terminal obtains a traveling plan suggestion based on target layer processing.

In the embodiments of this application, the target layer includes only the road information used when the target road information is inconsistent with the map road information. Compared with the high definition map, the target layer has a smaller amount of information and a higher transmission speed, and network resources for updating the high definition map by a vehicle are reduced.

Based on the second aspect of the embodiments of this application or the first implementation of the second aspect, in a second implementation of the second aspect of the embodiments of this application, the road information may include traffic light information, vehicle terminal track information, and/or road turning information.

The embodiments of this application provide a plurality of road information types, which increases flexibility and feasibility of the solution.

A third aspect of embodiments of this application provides a network device. The network device performs the method according to any one of the first aspect and the implementations of the first aspect.

A fourth aspect of embodiments of this application provides a vehicle terminal device. The vehicle terminal device performs the method according to any one of the second aspect and the implementations of the second aspect.

A fifth aspect of embodiments of this application provides a computer storage medium, where the computer storage medium stores instructions, and when the instructions are run on a computer, the computer is enabled to perform the method according to any one of the first aspect and the implementations of the first aspect, and/or the method according to any one of the second aspect and the implementations of the second aspect.

A sixth aspect of embodiments of this application provides a computer software product, and when the computer program product is run on a computer, the computer is enabled to perform the method according to any one of the first aspect and the implementations of the first aspect, and/or the method according to any one of the second aspect and the implementations of the second aspect.

**BRIEF DESCRIPTION OF DRAWINGS**

FIG. 1 is a schematic diagram of an architecture according to an embodiment of this application;
FIG. 2 is a schematic flowchart of a map verification method according to an embodiment of this application;
FIG. 3 is a schematic diagram of road information according to an embodiment of this application;
FIG. 4 is a schematic flowchart of obtaining vehicle track information according to an embodiment of this application;
FIG. 5 is a visualization diagram of vehicle tracks according to an embodiment of this application;
FIG. 6A and FIG. 6B are a schematic flowchart of traffic light verification according to an embodiment of this application;
FIG. 7 is a schematic flowchart of establishing a target layer according to an embodiment of this application;
FIG. 8 is a schematic flowchart of verifying an expected direction labeled for a lane according to an embodiment of this application;
FIG. 9 is a cloud target layer architecture according to an embodiment of this application;
FIG. 10 is a schematic diagram of basic elements of a target layer according to an embodiment of this application;
FIG. 11 is a schematic flowchart of updating a target layer by a network device according to an embodiment of this application;
FIG. 12 is a schematic flowchart of querying a route by a vehicle terminal according to an embodiment of this application;
FIG. 13 is a schematic diagram of a system architecture according to an embodiment of this application;
FIG. 14 is a schematic diagram of a structure of a network device according to an embodiment of this application;

FIG. 15 is a schematic diagram of a structure of a vehicle terminal device according to an embodiment of this application;
FIG. 16 is another schematic diagram of a structure of a network device according to an embodiment of this application; and
FIG. 17 is another schematic diagram of a structure of a vehicle terminal device according to an embodiment of this application.

## DESCRIPTION OF EMBODIMENTS

The following describes technical solutions in embodiments of this application with reference to the accompanying drawings in embodiments of this application. In this application, "at least one" means one or more, and "a plurality of" means two or more. The term "and/or" describes an association relationship between associated objects and represents that three relationships may exist. For example, A and/or B may indicate the following cases: A exists alone, both A and B exist, and B exists alone, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may represent: a, b, c, a and b, a and c, b and c, or a, b, and c, where a, b, and c may be singular or plural. It should be noted that "at least one" may also be interpreted as "one or more".

It should be noted that, in this application, the word such as "example" or "for example" is used to represent giving an example, an illustration, or a description. Any embodiment or design scheme described as "example" or "for example" in this application should not be explained as being more preferred or having more advantages than another embodiment or design scheme. Specifically, use of "example" or "for example" is intended to present a related concept in a specific manner.

Descriptions such as "first", "second" in embodiments of this application are merely used for indicating and distinguishing between described objects, do not show a sequence, do not indicate a specific limitation on a quantity of devices in embodiments of this application, and do not constitute any limitation on the embodiments of this application.

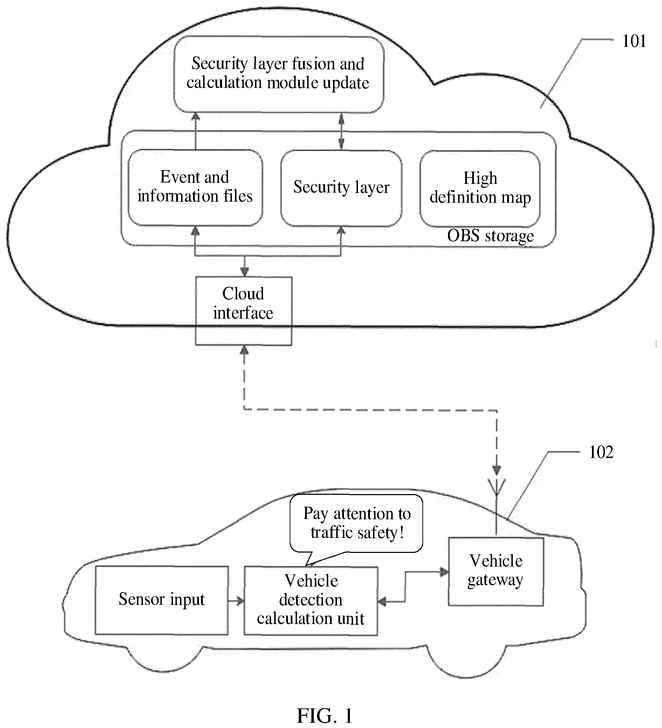

Refer to FIG. 1. FIG. 1 is a schematic diagram of an architecture according to an embodiment of this application. The architecture includes:
a network device 101 and a vehicle terminal device 102.

The network device 101 includes a storage unit, a transceiver unit, a processing unit, and the like, which are configured to receive and store target road information reported by the vehicle terminal device 102, where the target road information is road information collected by the vehicle terminal device 102, and is inconsistent with current map road information.

The network device 101 further performs fusion processing on the target road information to obtain a target layer. The target layer may also be referred to as a security layer, an independent security layer, or the like. This is not limited in this embodiment of this application.

Optionally, the network device updates a high definition map with reference to information of the target layer, to achieve map verification and revision.

The network device 101 may be a radio access network (radio access network, RAN) node (or device) that connects a terminal to a wireless network, and may also be referred to as a base station. Currently, for example, some RAN nodes are: a gNB (gNB), a transmission reception point (transmission reception point, TRP), an evolved NodeB (evolved NodeB, eNB), a radio network controller (radio network controller, RNC), a home base station (for example, a home evolved NodeB, or a home NodeB (HNB)), a wireless fidelity (wireless fidelity, Wi-Fi) access point (access point, AP), a wireless relay node, a wireless backhaul node, a transmission point (transmission point, TP), a transmission and reception point (transmission and reception point, TRP), or the like, or may be an ngNB in a 5G system, for example, an NR system, or a transmission point (TRP or TP), one or a group of antenna panels of a base station in a 5G system, or may be a network node constituting a gNB or a transmission point, such as a baseband unit (BBU), or a distributed unit (distributed unit, DU), or a device that implements a base station function in device-to-device (Device-to-Device, D2D), vehicle -to-everything (vehicle-to-everything, V2X), and a machine-to-machine (machine-to-machine, M2M) communications, a base station in a future communications system, or the like.

The vehicle terminal device 102 may be a vehicle having an autonomous driving function. In this embodiment of this application, the vehicle terminal device 102 may also be referred to as a vehicle, a vehicle terminal, or the like. This is not specifically limited herein. A quantity of vehicles having a vehicle terminal device 102 may be one or more. This is not limited in this embodiment of this application. When the quantity of vehicle terminal devices 102 is greater than or equal to two, the group of the vehicles may be referred to as crowdsourced vehicles.

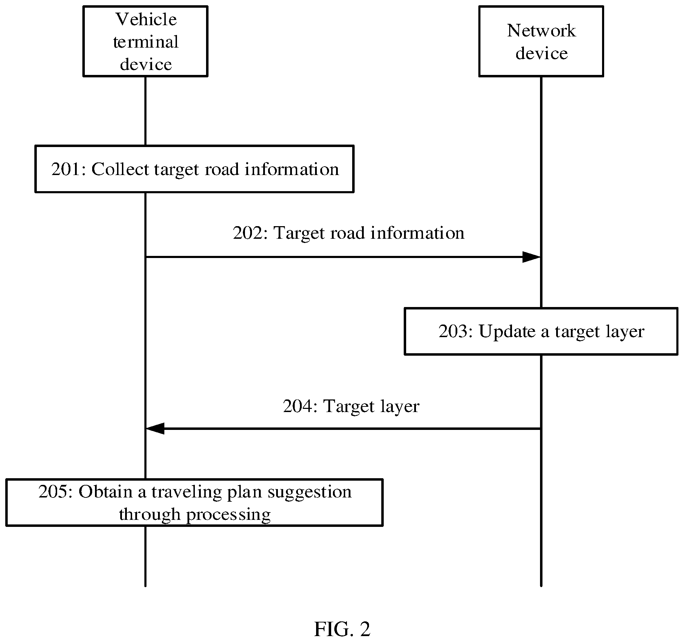

Refer to FIG. 2. An embodiment of this application provides a map verification method, including the following steps.

201: A vehicle terminal collects target road information.

Road information is road surface information and indication information that are related to vehicle traveling, for example, one or more of traffic light information, a traffic flow feature (vehicle speed information and vehicle track information), road turning information, lane marker information, and road indication information.

In this embodiment of this application, the traffic light information, the vehicle track information, and the road turning information are used as examples separately for descriptions.

1. The road information is the vehicle track information and the traffic light information.

When location information of a traffic light or an association relationship between the traffic light and a lane in a map is incorrect, the traffic light is incorrectly identified, or reliability is reduced, or the traffic light cannot be identified. In this embodiment of this application, a behavior feature of a traffic flow may be used to assist in determining whether the traffic light identified by a vehicle is correct, and further indirectly determining whether map information related to the traffic light at an intersection is incorrect.

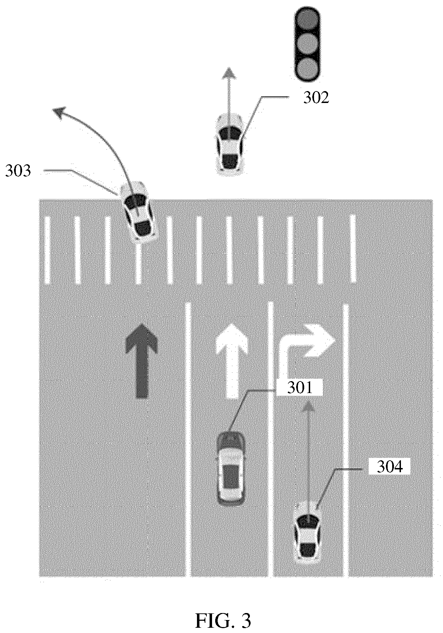

Refer to FIG. 3. It is assumed that a vehicle terminal 304 is used as a target vehicle terminal, that is, the vehicle terminal 304 obtains target road information. If go-straight light information collected by the vehicle terminal 304 based on a traffic light location indicated by map road information shows that a traffic light is red, but a vehicle terminal 302 quickly crosses an intersection stop line, in other words, the target road information collected by the vehicle terminal 304 is that the traffic light in a straight direction is green, the map road information is inconsistent with the target road information.

Refer to Table 1. Table 1 is a determining policy for a straight lane. It may be understood that Table 1 is merely one determining policy for a straight lane. A specific determining policy may be adjusted based on actual traveling. This is not limited in this embodiment of this application. For example, when a go-straight light is green, determining duration may be 3 seconds (s).

**Table 1**

| Go-straight light | Expected traffic flow speed and location features | Duration (s) |
| --- | --- | --- |
| Red | Low speed and before a stop line | 3 |
| Green | Non-stop | 4 |
| Color unknown | Not obvious | 3 |
| Undetected | Not obvious | 3 |

The following describes the determining policy in Table 1 by taking two cases as examples, in which the go-straight light is red and the color is unknown.

When a speed of a vehicle is not high and the vehicle stops before a stop line, and a stop state lasts for 3 seconds, a current go-straight light is considered to be red. Take FIG. 3 as an example. If the map road information obtained by the vehicle terminal 304 is that the go-straight light is red, however, the target road information collected by the vehicle terminal shows that the vehicle in the straight direction does not comply with "a speed of a vehicle is not high and the vehicle stops before the stop line, and a stop state lasts for 3 seconds", the map road information is inconsistent with the target road information.

A color of the go-straight light being unknown indicates that the color of the go-straight light is not detected. If the color of the go-straight light being unknown for 3 seconds, it may be considered that the current go-straight light is faulty or a collection system of the vehicle terminal is faulty. In this case, traffic flow features of different vehicles on a road may be different. For example, a vehicle in the straight direction has a traffic flow feature indicated by the red light and a traffic flow feature indicated by a green light (an expected traffic flow speed and location feature are not obvious). When the color of the go-straight light is unknown and the vehicle terminal detects that all vehicles in the straight direction on the road comply with "a speed of a vehicle is not high and the vehicle stops before the stop line, and a stop state lasts for 3 seconds" (red light), the map road information is inconsistent with the target road information. Alternatively, when the color of the go-straight light is unknown and the vehicle terminal detects that all vehicles in the straight direction on the road comply with "quickly cross the stop line" (green light), the map road information is inconsistent with the target road information.

Refer to Table 2. Table 2 is a determining policy for a right-turn lane. It may be understood that Table 2 is merely one determining policy for a right-turn lane. A specific determining policy may be adjusted based on actual traveling. This is not limited in this embodiment of this application. For example, when a right-turn light is green, determining duration may be 3 seconds.

**Table 2**

| Right-turn light | Expected traffic flow speed and location features | Duration (s) |
|---|---|---|
| Red | Low speed and before a stop line | 3 |
| Green | Non-stop | 4 |
| Disabled | Non-stop | 4 |
| Color unknown | Not obvious | 3 |

Refer to Table 3. Table 3 is a determining policy for a left-turn lane. It may be understood that Table 3 is merely one determining policy for a left-turn lane. A specific determining policy may be adjusted based on actual traveling. This is not limited in this embodiment of this application. For example, when a left-turn light is green, determining duration may be 3 seconds.

**Table 3**

| Whether there is a left-turn waiting area | Left-turn light | Go-straight light | Expected traffic flow speed and location features | Duration (s) |
|---|---|---|---|---|
| Yes | Red | Red | Low speed and before a stop line | 3 |
| Yes | Red | Green | Low speed and before the stop line of the left-turn waiting area | 5 |
| Yes | Green | Red | Non-stop | 4 |
| Yes | Green | Green | Non-stop | 4 |
| No | Red | Red | Low speed and before a stop line | 3 |
| No | Red | Green | Low speed and before a stop line | 3 |
| No | Green | Red | Non-stop | 4 |
| No | Green | Green | Non-stop | 4 |
| Yes | Green | Color unknown | Non-stop | 4 |
| Yes | Red | Color unknown | Low speed and before a stop line of the left-turn waiting area | 5 |
| Yes | Green | Undetected | Non-stop | 4 |
| Yes | Red | Undetected | Low speed and before a stop line of the left-turn waiting area | 5 |
| No | Green | Color unknown | Non-stop | 4 |
| No | Red | Color unknown | Low speed and before a stop line | 5 |
| No | Green | Undetected | Non-stop | 4 |
| No | Red | Undetected | Low speed and before a stop line | 5 |
| No | No | Red | Low speed and before a stop line | 3 |
| No | No | Green | Non-stop | 4 |
| No | No | Color unknown | Not obvious | 3 |
| No | No | Undetected | Not obvious | 3 |
| Yes | Color unknown | Green | Not obvious | 3 |

(continued)

| Whether there is a left-turn waiting area | Left-turn light | Go-straight light | Expected traffic flow speed and location features | Duration (s) |
|---|---|---|---|---|
| Yes | Color unknown | Red | Not obvious | 3 |
| Yes | Color unknown | Undetected | Not obvious | 3 |
| Yes | Color unknown | Color unknown | Not obvious | 3 |
| No | Color unknown | Green | Not obvious | 3 |
| No | Color unknown | Red | Not obvious | 3 |
| No | Color unknown | Undetected | Not obvious | 3 |
| No | Color unknown | Color unknown | Not obvious | 3 |

2. The road information is the vehicle track information and the road turning information.

Refer to FIG. 3. It is assumed that the map road information obtained by the vehicle terminal 304 is that a left lane is a straight lane, and a vehicle terminal 303 turns left, that is, the target road information collected by the vehicle terminal 304 is that the left lane is not a straight lane (the left lane is a left-turn lane, a left-turn lane that is combined with a straight lane, or the like). The map road information is inconsistent with the target road information.

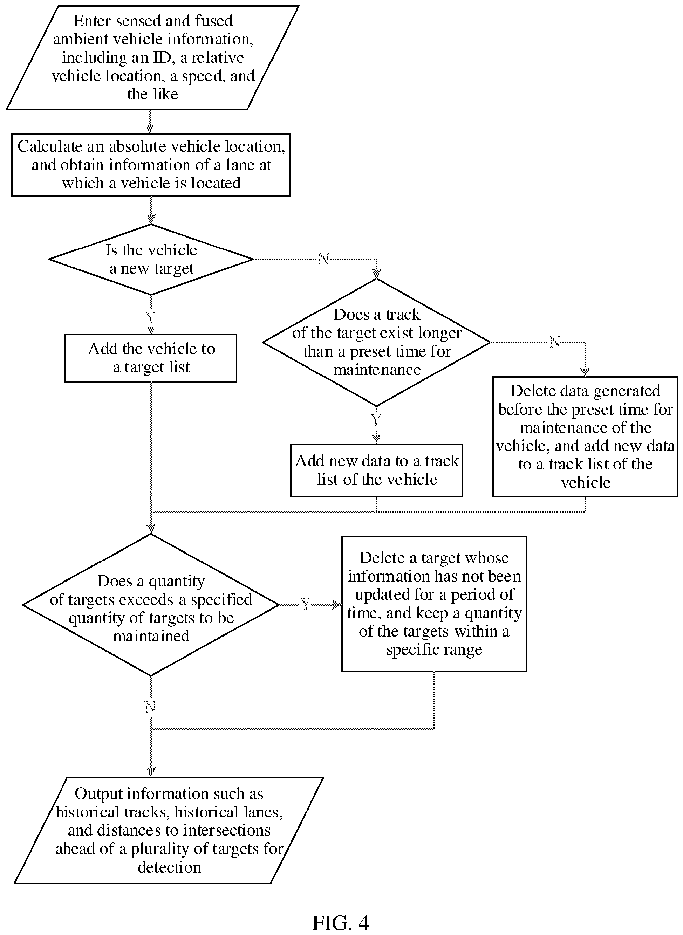

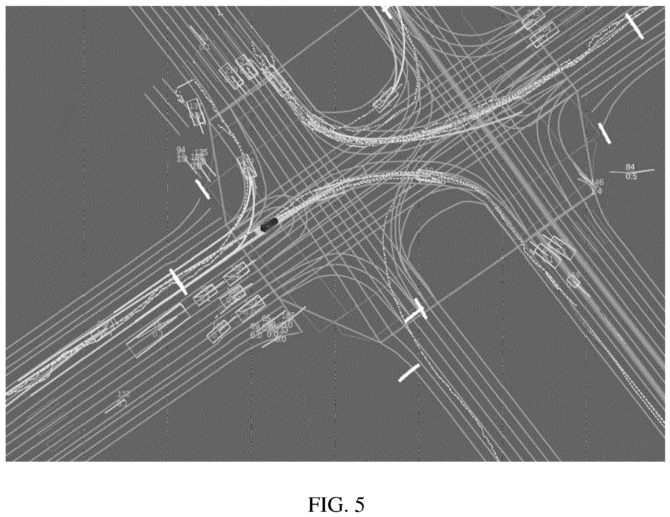

Refer to FIG. 4. FIG. 4 is a possible implementation for obtaining the vehicle track information according to an embodiment of this application. It may be understood that there may be another solution for obtaining the vehicle track information. For example, a quantity of targets is not determined, and a quantity of target lists is not limited. A specific solution is not described herein. Refer to FIG. 5. FIG. 5 is a visualization diagram of vehicle tracks.

202: A vehicle terminal sends the target road information to a network device.

In this embodiment of this application, each piece of road information may correspond to a piece of corresponding identity (identity, ID) information. The network device may also be a cloud device, or the like. This is not specifically limited herein. Further, the corresponding identity information may be set for each road section by using a road section as a unit. This is not specifically limited herein.

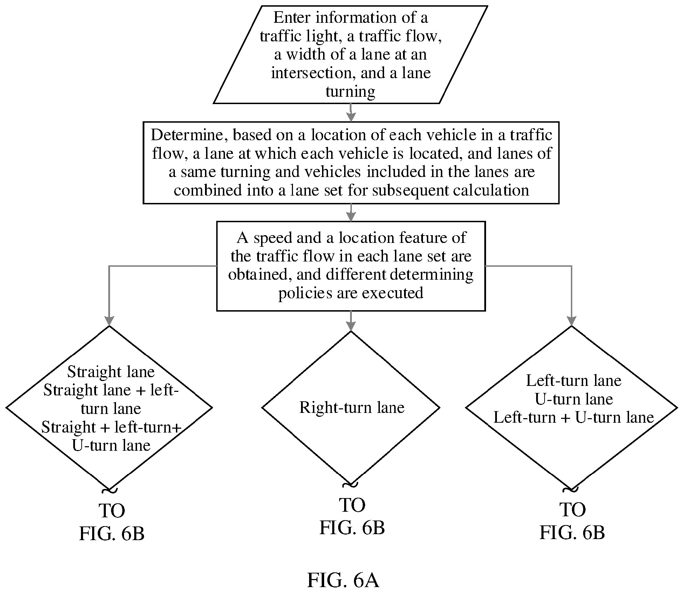

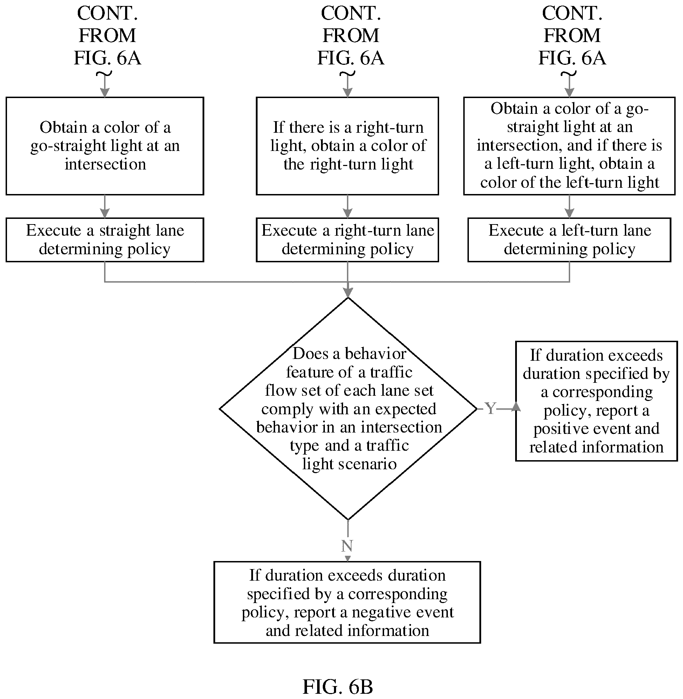

Refer to FIG. 6A and FIG. 6B. FIG. 6A and FIG. 6B are a schematic flowchart of traffic light verification when the road information is the traffic light information according to an embodiment of this application. The traffic light verification is performed based on different lanes.

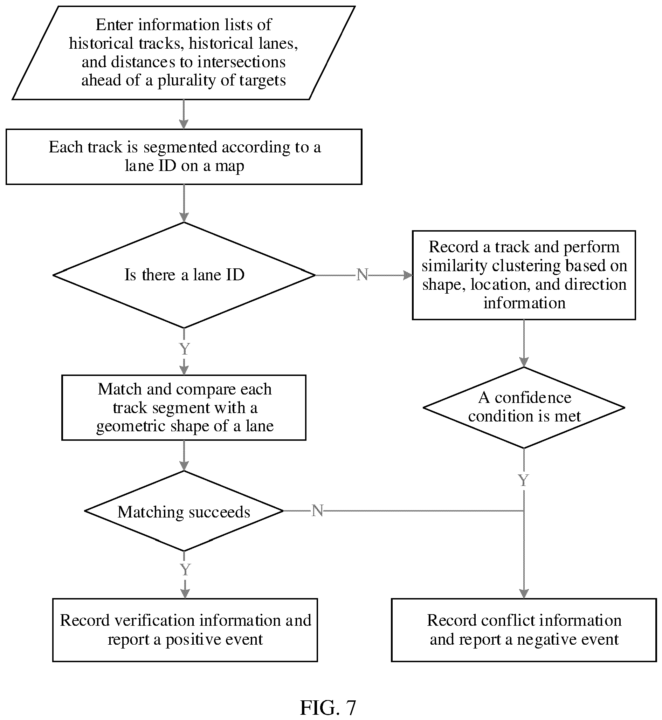

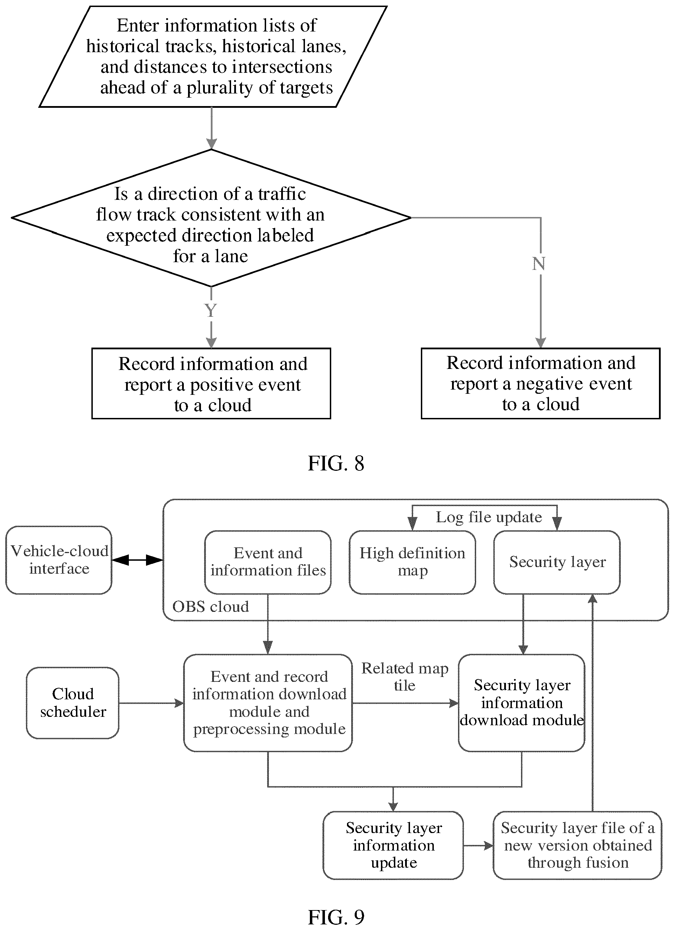

FIG. 7 is a schematic flowchart of establishing a target layer when the road information is the vehicle track information and the road turning information. Refer to FIG. 8. FIG. 8 is a schematic flowchart of verifying an expected direction labeled for a lane when the road information is the vehicle track information and the road turning information. The road turning information is verified based on the vehicle track information.

A positive event indicates that traffic flow track information collected by a vehicle terminal is consistent with information labeled in a map, and a negative event indicates that the traffic flow track information collected by the vehicle terminal is inconsistent with the information labeled in the map.

It may be understood that the vehicle terminal device may report only a negative event, or may report positive and negative events on some labeled road sections (for example, accident-prone sections) and report negative information on another road section. This is not specifically limited herein. In this embodiment of this application, only the report of the positive event and the negative event is taken as an example for description.

203. The network device updates the target layer.

Refer to FIG. 9. FIG. 9 is an architecture of a cloud target layer according to an embodiment of this application. The target layer collects error and correct information reported by a plurality of vehicles to a cloud, extracts error types or correct records related to roads and lanes in the target layer, and performs statistical analysis on samples with reference to existing target layer information.

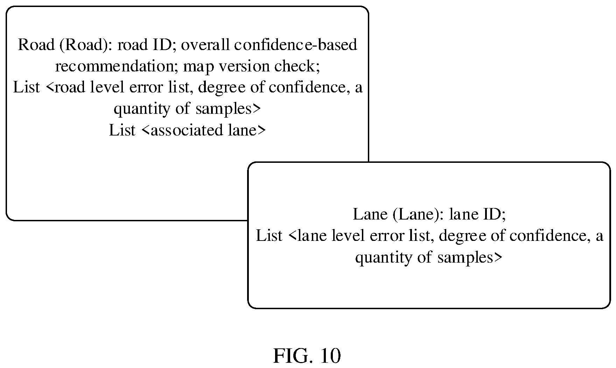

Refer to FIG. 10. FIG. 10 is a schematic diagram of basic elements of the target layer according to an embodiment of this application. The basic elements include one or more of a road, a road ID, a map version, a lane, a lane ID, an associated lane, and the like.

The basic element in the target layer may be a road, and the target layer is a set of road structures. A road level error includes but is not limited to a road structure observed by the vehicle terminal being inconsistent with a road structure displayed by the map. A lane level error includes but is not limited to a lane structure observed by the vehicle terminal being inconsistent with a lane structure displayed by the map; traffic light information collected by the vehicle terminal based on a traffic light location indicated by the map road information being inconsistent with traffic light information collected by the vehicle terminal based on the traffic flow track information, or the like.

It may be understood that using a road as a basic element is only an example of the target layer, and there may be another element unit, for example, using a unit surface area as a unit. This is not specifically limited herein.

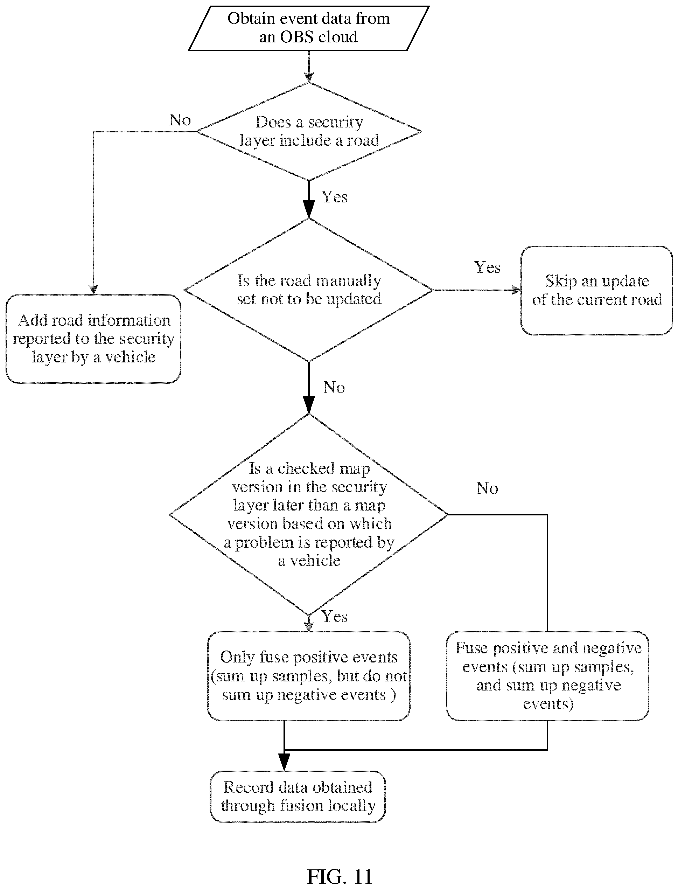

Refer to FIG. 11. The network device may update the target layer based on the target road information reported by the vehicle terminal.

The following briefly describes an update process.

After obtaining the target road information reported by the vehicle, the network device may determine whether there is data corresponding to the road information in the target layer. If there is no data corresponding to the road information, the data reported by the vehicle terminal is added. If there is the data corresponding to the road information, fusion is required.

The network device may process the data reported by the vehicle in pre-work, and store the data as a file after sorting and classifying. The file data is read when target layer data is fused.

Optionally, when the target layer is updated, manual determining of not updating the target layer may be added. The target layer may have an interface provided for a map technician, so that an update of a road element of the target layer may be manually skipped and confirmed. If a mapmaker is fixing a problem with a road in the map, the mapmaker can add a label in the target layer and turn off an automatic target layer update process of the road element.

Optionally, when the target layer is updated, map version information determining may be added. The road information reported by the vehicle terminal may be based on map road information of different versions. In this case, the target layer provides an earliest trusted map version that is manually confirmed or whose version information is read. A record of the negative event needs to be based on a version later than the earliest trusted version.

When the positive and negative events are fused, total samples of various events (including positive and negative events) belonging to a current road and the negative events in the samples are classified and accumulated (if only the positive events are fused, the negative events are not accumulated), to provide sample data for a subsequent T-test calculation.

T-test calculation: A confidence interval refers to a range of estimates for a population parameter constructed from sample statistics. When it is determined that a large sample is displayed, the confidence interval refers to a possibility that a true probability of detecting a map error by the vehicle falls around a probability of detecting a map error based on a vehicle measurement statistics result of a medium or small sample. A test level indicates a degree of confidence displayed by the interval. Then a worst case of the confidence interval is taken as a degree of confidence of there being a map error of a road.

A specific process is shown as follows.

The negative event refers to a sampling event when the vehicle detects a map error, and a positive event refers to a sampling event when the vehicle detects that a map is correct. A total of samples is a sum of the positive and negative events.

It is assumed that a negative event score is 0, and others are positive events whose scores are 1. A mean is:

$$\overline{x} = \frac{\text{sum} - \text{neg}\mathit{Sum}}{\text{sum}}$$

A standard deviation is:

$$\sigma = \sqrt{\frac{\text{neg}\mathit{Sum} * \overline{x}^2 + (\mathit{sum} - \mathit{negSum}) * (1 - \overline{x})^2}{\text{sum} - 1}}$$

A minimum confidence value of the confidence interval is:

$$\min = \overline{x} - t * \frac{\sigma}{\sqrt{\text{sum}}}$$

In the formula, sum indicates a quantity of samples, negSum indicates a quantity of negative events, possum indicates a quantity of positive events, and t can be obtained by querying a T-test table based on the quantity of samples and a test level.

T-test, also referred to as student t test (Student's t test), is mainly used for a sample with a small size (for example, n < 30), where a population standard deviation $\sigma$ is unknown and is assumed to be in a normal distribution. It is a method used to test significance of a difference between means of a small sample and a large sample. T-test infers a probability of a difference by using a T-distribution theory, to determine whether the difference between the two means is significant. The T distribution is normal when a sample size is sufficiently large (trending to infinity). After the quantity of samples and the quantity of negative events are obtained, a test level $\alpha$ = 99% is determined, a test statistic is calculated, a corresponding boundary value table is checked, and a confidence value is determined, where t is obtained by querying a T-test table based on the quantity of samples sum and the test level ($\alpha$ = 99%).

The network device records a minimum confidence value data calculated after the fusion.

The network device may perform correction and verification on the map based on an updated target layer.

204. The network device sends the target layer to the vehicle terminal.

The target layer includes the road information used when the target road information is inconsistent with the map road information. Compared with a high definition map, the target layer has a smaller amount of information and a higher transmission speed, and network resources for updating the high definition map by a vehicle are reduced.

An occasion at which the network device sends the target layer to the vehicle terminal is not limited in this embodiment of this application. For example, the network device may send the target layer to the vehicle terminal at a scheduled time, for example, once an hour, or may send the target layer when the vehicle terminal is about to travel to a range included in the target layer. This is not specifically limited in this embodiment of this application.

205: The vehicle terminal obtains a traveling plan suggestion based on target layer processing.

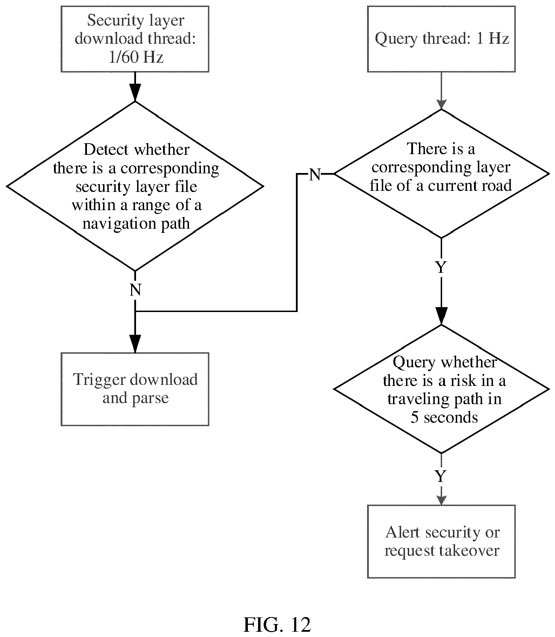

FIG. 12 is a schematic flowchart of querying a route by the vehicle terminal according to an embodiment of this application.

When the vehicle terminal travels to a road section or range included in the target layer, the vehicle terminal may obtain the traveling plan suggestion based on the target layer processing, and a decision is made by the vehicle terminal based on the traveling plan suggestion, for example, prompting a driver about a related risk or changing a traveling scheme. This is not limited herein.

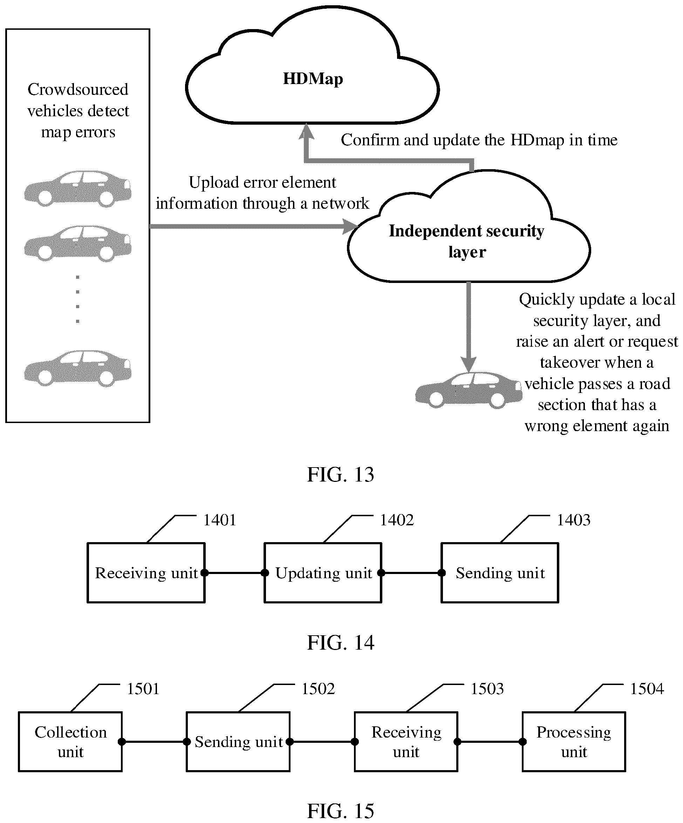

Refer to FIG. 13. FIG. 13 is a schematic diagram of a system architecture according to an embodiment of this application. The network device (or the cloud) integrates information of error and correct events to quickly update an independent target layer. The layer includes information such as an element ID and a location. The target layer information is not limited to incorrect labeling of map element semantic, but may also be incorrect labeling of a shape or a location. Target layer content is confirmed in time and the high definition map is updated, which improves accuracy of the high definition map.

The map verification method in embodiments of this application is described above. The following describes apparatuses in embodiments of this application. Refer to FIG. 14. An embodiment of a network device according to the embodiments of this application includes:

  a receiving unit 1401, configured to receive target road information sent by a vehicle terminal, where the target road information is road information collected by the vehicle terminal;
  an updating unit 1402, configured to update a target layer based on the target road information, where the target layer is used to indicate road information used when the target road information is inconsistent with map road information, and the map road information is road information indicated by a map; and update the map based on the target layer; and
  a sending unit 1403, configured to send the target layer to the vehicle terminal.

Each unit may perform an operation performed by the network device in the embodiment shown in FIG. 2. Details are not described herein again.

Refer to FIG. 15. An embodiment of a vehicle terminal device according to the embodiments of this application includes:

  a collection unit 1501, configured to collect target road information;
  a sending unit 1502, configured to send the target road information to a target layer when the target road information is inconsistent with map road information, where the map road information is road information indicated by a map;
  a receiving unit 1503, configured to receive the target layer from a network device; and
  a processing unit 1504, configured to obtain a traveling plan suggestion based on target layer processing.

Each unit may perform an operation performed by the vehicle terminal device in the embodiment shown in FIG.

2. Details are not described herein again.

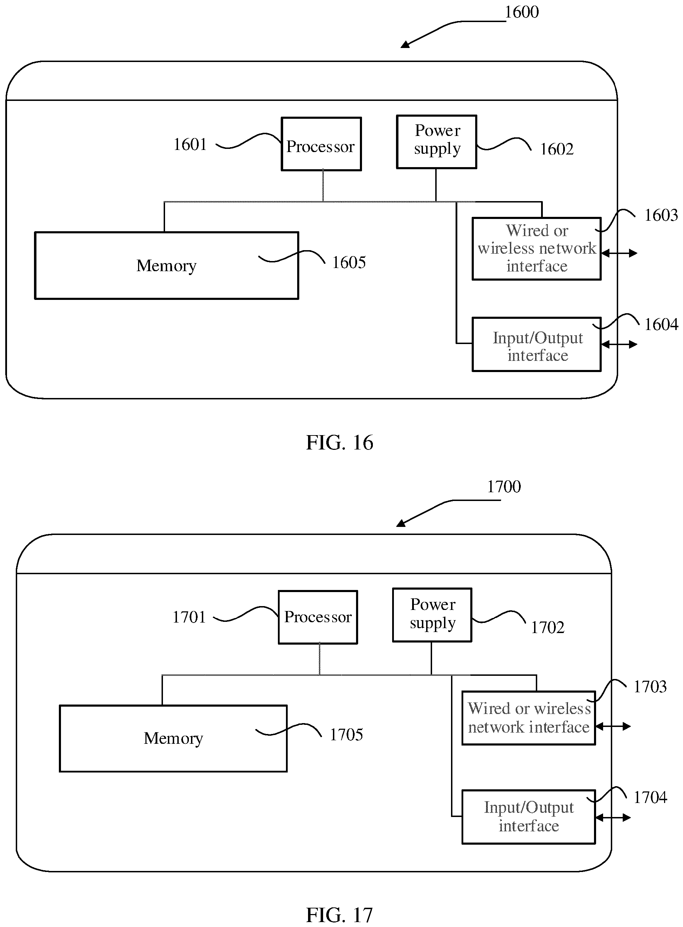

Refer to FIG. 16. An embodiment of this application provides a network device 1600. The network device 1600 may include one or more processors 1601 and a memory 1605. The memory 1605 stores program code. Further, the memory 1605 may further store data.

The memory 1605 may be a volatile memory or a non-volatile memory or a persistent memory. The program code stored in the memory 1605 may include one or more modules, and each module may include a series of instruction operations for the network device. Further, the processor 1601 may be configured to communicate with the memory 1605, and perform the series of instruction operations in the memory 1605 on the network device 1600.

The network device 1600 may further include one or more power supplies 1602, one or more wired or wireless network interfaces 1603, and one or more input/output interfaces 1604.

The processor 1601 may perform an operation performed by the network device in the embodiment shown in FIG. 2. Details are not described herein again.

Refer to FIG. 17. An embodiment of this application provides a vehicle terminal device 1700. The vehicle terminal device 1700 may include one or more processors 1701 and a memory 1705. The memory 1705 stores program code. Further, the memory 1705 may store data.

The memory 1705 may be a volatile memory or a non-volatile memory or a persistent memory. The program code stored in the memory 1705 may include one or more modules, and each module may include a series of instruction operations for the vehicle terminal device. Further, the processor 1701 may be configured to communicate with the memory 1705, and perform the series of instruction operations in the memory 1705 on the vehicle terminal device 1700.

The vehicle terminal device 1700 may further include one or more power supplies 1702, one or more wired or wireless network interfaces 1703, and one or more input/output interfaces 1704.

The processor 1701 may perform an operation performed by the vehicle terminal device in the embodiment shown in FIG. 2. Details are not described herein again.

It may be clearly understood by a person skilled in the art that, for purpose of convenient and brief description, for detailed working processes of the foregoing system, apparatuses, and units, refer to corresponding processes in the foregoing method embodiments, and details are not described herein again.

In embodiments provided in this application, it should be understood that the disclosed system, apparatuses, and method may be implemented in other manners. For example, the described apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or the units may be implemented in electronic, mechanical, or other similar forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in the form of a software function unit and is sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes: any medium that can store program code, such as a USB flash drive, a removable hard disk drive, a read-only memory (read-only memory, ROM), a random access memory (random access memory, RAM), a magnetic disk, or an optical disc.

## Claims

1. A map verification method, comprising:

   receiving, by a network device, target road information sent by a vehicle terminal, wherein the target road information is road information collected by the vehicle terminal; and

updating, by the network device, a target layer based on the target road information, wherein the target layer is used to indicate road information used when the target road information is inconsistent with map road information, and the map road information is road information indicated by a map.

2. The method according to claim 1, wherein the method further comprises:
sending, by the network device, the target layer to the vehicle terminal.

3. The method according to claim 1 or 2, wherein the method further comprises:
updating, by the network device, the map based on the target layer.

4. The method according to any one of claims 1 to 3, wherein the road information comprises traffic light information, vehicle terminal track information, and/or road turning information.

5. A map verification method, comprising:

collecting, by a vehicle terminal, target road information; and
when the target road information is inconsistent with map road information, sending, by the vehicle terminal, the target road information to a target layer, wherein the map road information is road information indicated by a map.

6. The method according to claim 5, wherein the method further comprises:

receiving, by the vehicle terminal device, the target layer from a network device; and
obtaining, by the vehicle terminal, a traveling plan suggestion based on target layer processing.

7. The method according to claim 5 or 6, wherein the road information comprises traffic light information, vehicle terminal track information, and/or road turning information.

8. A network device, comprising:

a receiving unit, configured to receive target road information sent by a vehicle terminal, wherein the target road information is road information collected by the vehicle terminal; and
an updating unit, configured to update a target layer based on the target road information, wherein the target layer is used to indicate road information used when the target road information is inconsistent with map road information, and the map road information is road information indicated by a map.

9. The device according to claim 8, wherein the network device further comprises:
a sending unit, configured to send the target layer to the vehicle terminal.

10. The device according to claim 8 or 9, wherein the updating unit is further configured to update the map based on the target layer.

11. The device according to any one of claims 8 to 10, wherein the road information comprises traffic light information, vehicle terminal track information, and/or road turning information.

12. A vehicle terminal device, comprising:

a collection unit, configured to collect target road information; and
a sending unit, configured to send the target road information to a target layer when the target road information is inconsistent with map road information, wherein the map road information is road information indicated by a map.

13. The device according to claim 12, wherein the vehicle terminal device further comprises:

a receiving unit, configured to receive the target layer from a network device; and
a processing unit, configured to obtain a traveling plan suggestion based on target layer processing.

14. The device according to claim 12 or 13, wherein the road information comprises traffic light information, vehicle terminal track information, and/or road turning information.

15. A computer storage medium, wherein the computer storage medium stores instructions, and when the instructions are run on a computer, the computer is enabled to perform the method according to any one of claims 1 to 7.

16. A computer program product, wherein when the computer program product is run on a computer, the computer is enabled to perform the method according to any one of claims 1 to 7.

FIG. 1

FIG. 2

FIG. 3

Enter sensed and fused
ambient vehicle information,
including an ID, a relative
vehicle location, a speed, and
the like

↓

Calculate an absolute vehicle location,
and obtain information of a lane at
which a vehicle is located

↓

Is the vehicle
a new target

— N →

↓ Y

Add the vehicle to
a target list

Does a track
of the target exist longer
than a preset time for
maintenance

— N →

↓ Y

Add new data to a track
list of the vehicle

Delete data generated
before the preset time for
maintenance of the
vehicle, and add new data
to a track list of the
vehicle

↓

Does a quantity
of targets exceeds a specified
quantity of targets to be
maintained

— Y →

Delete a target whose
information has not been
updated for a period of
time, and keep a quantity
of the targets within a
specific range

↓ N

Output information such as
historical tracks, historical lanes,
and distances to intersections
ahead of a plurality of targets for
detection

FIG. 4

16

FIG. 5

Enter information of a
traffic light, a traffic flow,
a width of a lane at an
intersection, and a lane
turning

Determine, based on a location of each vehicle in a traffic
flow, a lane at which each vehicle is located, and lanes of
a same turning and vehicles included in the lanes are
combined into a lane set for subsequent calculation

A speed and a location feature of
the traffic flow in each lane set are
obtained, and different determining
policies are executed

Straight lane
Straight lane + left-
turn lane
Straight + left-turn+
U-turn lane

Right-turn lane

Left-turn lane
U-turn lane
Left-turn + U-turn lane

TO
FIG. 6B

TO
FIG. 6B

TO
FIG. 6B

FIG. 6A

CONT.
FROM
FIG. 6A
~

CONT.
FROM
FIG. 6A
~

CONT.
FROM
FIG. 6A
~

| | | |
|---|---|---|
| Obtain a color of a go-straight light at an intersection | If there is a right-turn light, obtain a color of the right-turn light | Obtain a color of a go-straight light at an intersection, and if there is a left-turn light, obtain a color of the left-turn light |
| Execute a straight lane determining policy | Execute a right-turn lane determining policy | Execute a left-turn lane determining policy |

Does a behavior feature of a traffic flow set of each lane set comply with an expected behavior in an intersection type and a traffic light scenario

—Y—→

If duration exceeds duration specified by a corresponding policy, report a positive event and related information

N

If duration exceeds duration specified by a corresponding policy, report a negative event and related information

FIG. 6B

Enter information lists of
historical tracks, historical lanes,
and distances to intersections
ahead of a plurality of targets

↓

Each track is segmented according to a
lane ID on a map

↓

Is there a lane ID ──N──→ Record a track and perform
similarity clustering based on
shape, location, and direction
information

↓ Y                                    ↓

Match and compare each
track segment with a
geometric shape of a lane              A confidence
                                       condition is met

↓                                      ↓ Y

Matching succeeds ──N────────────────┘

↓ Y

Record verification information and
report a positive event

Record conflict information
and report a negative event

FIG. 7

Enter information lists of
historical tracks, historical lanes,
and distances to intersections
ahead of a plurality of targets

Is a direction of a traffic
flow track consistent with an
expected direction labeled
for a lane

N

Y

Record information and
report a positive event
to a cloud

Record information and
report a negative event
to a cloud

FIG. 8

Vehicle-cloud
interface

Log file update

Event and
information files

High definition
map

Security layer

OBS cloud

Cloud
scheduler

Event and record
information download
module and
preprocessing module

Related map
tile

Security layer
information
download module

Security layer
information
update

Security layer file of a
new version obtained
through fusion

FIG. 9

Road (Road): road ID; overall confidence-based recommendation; map version check;
List <road level error list, degree of confidence, a quantity of samples>
List <associated lane>

Lane (Lane): lane ID;
List <lane level error list, degree of confidence, a quantity of samples>

FIG. 10

Obtain event data from
an OBS cloud

Does a security
layer include a road

No

Yes

Add road information
reported to the security
layer by a vehicle

Is the road manually
set not to be updated

Yes

Skip an update
of the current road

No

Is a checked map
version in the security
layer later than a map
version based on which
a problem is reported by
a vehicle

No

Yes

Only fuse positive events
(sum up samples, but do not
sum up negative events )

Fuse positive and negative
events (sum up samples,
and sum up negative
events)

Record data obtained
through fusion locally

FIG. 11

```
┌─────────────────────┐              ┌─────────────────────┐
│   Security layer    │              │  Query thread: 1 Hz │
│  download thread:   │              │                     │
│      1/60 Hz        │              └──────────┬──────────┘
└──────────┬──────────┘                         │
           │                                    ▼
           ▼                              ╱───────────╲
     ╱───────────╲                       ╱ There is a  ╲
    ╱ Detect whether╲         ─N─       ╱ corresponding ╲
   ╱ there is a       ╲ ◄──────────────╱ layer file of a  ╲
  ╱ corresponding      ╲               ╲ current road     ╱
  ╲ security layer file ╱               ╲               ╱
   ╲ within a range of ╱                 ╲─────┬─────╱
    ╲ a navigation path╱                       │
     ╲───────────╱                             Y
          │                                    │
          N                                    ▼
          │                              ╱───────────╲
          ▼                             ╱ Query whether╲
   ┌─────────────┐                     ╱ there is a risk ╲
   │Trigger      │                     ╲ in a traveling  ╱
   │download and │                      ╲ path in       ╱
   │parse        │                       ╲ 5 seconds   ╱
   └─────────────┘                        ╲─────┬────╱
                                                │
                                                Y
                                                │
                                                ▼
                                         ┌─────────────┐
                                         │Alert security│
                                         │or request    │
                                         │takeover      │
                                         └─────────────┘
```

FIG. 12

Crowdsourced
vehicles detect
map errors

**HDMap**

Confirm and update the HDmap in time

Upload error element
information through a network

**Independent security layer**

Quickly update a local
security layer, and
raise an alert or request
takeover when a
vehicle passes a road
section that has a
wrong element again

FIG. 13

1401 Receiving unit — 1402 Updating unit — 1403 Sending unit

FIG. 14

1501 Collection unit — 1502 Sending unit — 1503 Receiving unit — 1504 Processing unit

FIG. 15

1600

**FIG. 16**

1700

**FIG. 17**

## INTERNATIONAL SEARCH REPORT

| International application No. |
| --- |
| **PCT/CN2020/132714** |

### A. CLASSIFICATION OF SUBJECT MATTER

G01C 21/32(2006.01)i; G06F 16/29(2019.01)i

According to International Patent Classification (IPC) or to both national classification and IPC

### B. FIELDS SEARCHED

Minimum documentation searched (classification system followed by classification symbols)

G01C21/-;G06F16/-

Documentation searched other than minimum documentation to the extent that such documents are included in the fields searched

Electronic data base consulted during the international search (name of data base and, where practicable, search terms used)

CNPAT, CNKI, WPI, EPODOC: 地图, 高清, 高精, 校验, 更新, 网络, 服务器, 道路, 图层, 比较, 对比, 不, 一致, 同, 符; HD, map+, calibrat+, server, road, differ+, compar+, layer

### C. DOCUMENTS CONSIDERED TO BE RELEVANT

| Category* | Citation of document, with indication, where appropriate, of the relevant passages | Relevant to claim No. |
| --- | --- | --- |
| X | CN 105973245 A (BAIDU ONLINE NETWORK TECHNOLOGY (BEIJING) CO., LTD.) 28 September 2016 (2016-09-28)<br>description, paragraphs [0034]-[0090], and figures 1-8 | 1-16 |
| X | CN 109933635 A (TENCENT DADI TONGTU (BEIJING) TECHNOLOGY CO., LTD. et al.) 25 June 2019 (2019-06-25)<br>description, paragraphs [0034]-[0046], and figures 1-2 | 1-16 |
| X | CN 110146097 A (BEIJING MOMENTA TECHNOLOGY CO., LTD.) 20 August 2019 (2019-08-20)<br>description, paragraphs [0004]-[0053] | 1-16 |
| A | CN 107515006 A (HUAWEI TERMINAL (DONGGUAN) CO., LTD.) 26 December 2017 (2017-12-26)<br>entire document | 1-16 |
| A | US 2020372012 A1 (HERE GLOBAL B.V.) 26 November 2020 (2020-11-26)<br>entire document | 1-16 |
| A | US 2016307445 A1 (C'S LAB CO., LTD. et al.) 20 October 2016 (2016-10-20)<br>entire document | 1-16 |

☐ Further documents are listed in the continuation of Box C. ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **09 August 2021** | **27 August 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2020/132714**

| Patent document cited in search report | | | Publication date (day/month/year) | Patent family member(s) | | | Publication date (day/month/year) |
|---|---|---|---|---|---|---|---|
| CN | 105973245 | A | 28 September 2016 | None | | | |
| CN | 109933635 | A | 25 June 2019 | None | | | |
| CN | 110146097 | A | 20 August 2019 | WO | 2020042348 | A1 | 05 March 2020 |
| CN | 107515006 | A | 26 December 2017 | US | 2018306590 | A1 | 25 October 2018 |
| | | | | JP | 6675770 | B2 | 01 April 2020 |
| | | | | WO | 2017215213 | A1 | 21 December 2017 |
| | | | | JP | 2019502152 | A | 24 January 2019 |
| | | | | EP | 3355027 | A1 | 01 August 2018 |
| US | 2020372012 | A1 | 26 November 2020 | None | | | |
| US | 2016307445 | A1 | 20 October 2016 | JP | WO2015098280 | A1 | 23 March 2017 |
| | | | | WO | 2015098280 | A1 | 02 July 2015 |
| | | | | JP | 6397827 | B2 | 26 September 2018 |
| | | | | US | 9672739 | B2 | 06 June 2017 |

Form PCT/ISA/210 (patent family annex) (January 2015)